# EUROPEAN PATENT APPLICATION

(11) **EP 4 442 769 A1**
(43) Date of publication of application: **09.10.2024**
(21) Application number: 22901161.4
(22) Date of filing: 24.11.2022
(51) Int. Cl.: C08L 75/04, C08G 18/48, C08K 3/36, C08L 1/02, C08L 83/04, D06N 3/14

(54) **URETHANE RESIN COMPOSITION, SYNTHETIC LEATHER, AND METHOD FOR PRODUCING SYNTHETIC LEATHER**

(30) Priority: 02.12.2021 JP 2021196033
(71) Applicant: DIC Corporation, Tokyo 174-8520 (JP)
(72) Inventor: TETSUI Tomohiro, Takaishi-shi, Osaka 592-0001 (JP); UEGUCHI Miwa, Takaishi-shi, Osaka 592-0001 (JP); MAEDA Ryo, Takaishi-shi, Osaka 592-0001 (JP); NONAKA Ryo, Takaishi-shi, Osaka 592-0001 (JP)
(74) Representative: Kraus & Lederer PartGmbB
(86) International application number: PCT/JP2022/043265
(87) International publication number: WO 2023/100728

(57) **Abstract**

The present invention provides a urethane resin composition including a urethane resin (A) having a nonionic group, water (B), and a powder (C), wherein the urethane resin (A) has a flow start temperature of 100°C or above, the mass ratio [(A)/(B)] of the urethane resin (A) to the water (B) is in the range of 50/50 to 80/20, and the bulk density of the powder (C) is 400 g/L or less. The present invention also provides a synthetic leather including at least a base fabric (i), an adhesive layer (ii), and a skin layer (iii), wherein the adhesive layer (ii) is formed from the urethane resin composition. The urethane resin composition can form a film with excellent peel strength and texture.

## Description

### Technical Field

The present invention relates to a urethane resin composition, a synthetic leather, and a synthetic leather production method.

### Background Art

Compositions containing a polyurethane resin are conventionally used in various applications, such as, for example, artificial leathers, synthetic leathers, coating agents, glove coatings, film gloves, and adhesives. These compositions are mainly solvent-based urethane resin compositions. The solvent used in the solvent-based urethane resins is dimethylformamide (DMF). However, DMF is harmful to living bodies and the environment. Due to this concern, the legal regulations on DMF are more strict year after year. Thus, environmental countermeasures are explored by way of, for example, the shift to weak solvent-based, aqueous, or solventless products (see, for example, Patent Literature 1).

Among such products, waterborne urethanes (polyurethane dispersions, PUD) have found use in applications including those described above. While one-pack adhesives consisting of a PUD main agent alone require no aging, difficulties are encountered in practical use because it is difficult to control the permeation of the adhesive, and texture and peel strength are unsatisfactory.

On the other hand, two-pack adhesives that combine a PUD main agent and an isocyanate crosslinking agent have a short serviceable time (pot life) of the blend and thus often do not allow stable working. While two-pack adhesives that combine a PUD main agent and an oxazoline crosslinking agent have a long pot life of the blend, practical use is difficult because the crosslinked film that is formed is low in strength and the product made with the adhesive exhibits low peel strength. Furthermore, two-pack adhesives that combine a PUD main agent and a carbodiimide crosslinking agent have a long pot life of the blend and form a strong crosslinked film, but the crosslinking reaction is so fast that bonding working is impossible.

### Citation List

### Patent Literature

PTL 1: Japanese Unexamined Patent Application Publication No. 2007-119749

### Summary of Invention

### Technical Problem

An object of the present invention is to provide a water-containing urethane resin composition that offers excellent peel strength and good texture.

### Solution to Problem

The present invention provides a urethane resin composition including a urethane resin (A) having a nonionic group, water (B), and a powder (C), wherein the urethane resin (A) has a flow start temperature of 100°C or above, the mass ratio [(A)/(B)] of the urethane resin (A) to the water (B) is in the range of 50/50 to 80/20, and the bulk density of the powder (C) is 400 g/L or less.

The present invention also provides a synthetic leather including at least a base fabric (i), an adhesive layer (ii), and a skin layer (iii), wherein the adhesive layer (ii) is formed from the urethane resin composition.

The present invention also provides a synthetic leather production method including applying the urethane resin composition and attaching a layer to the urethane resin composition before the urethane resin composition is completely cured.

### Advantageous Effects of Invention

The urethane resin composition of the present invention contains water and is environmentally friendly. Furthermore, the urethane resin composition excels in peel strength and texture. Furthermore, the urethane resin composition does not need a crosslinking agent and has a long pot life, and is also excellent in immediate releasability.

Thus, the urethane resin composition of the present invention may be suitably used in the production of synthetic leather, and may be suitably used especially as an adhesive layer in synthetic leather.

### Description of Embodiments

A urethane resin composition of the present invention includes a specific urethane resin (A), water (B), and a specific powder (C).

The urethane resin (A) essentially has a flow start temperature of 100°C or above. By virtue of this configuration of the urethane resin (A), the urethane resin is not thermally melted during drying and will not permeate into a substrate, such as a base fabric, thereby ensuring excellent peel strength and soft texture. In order to further enhance the above effects, the flow start temperature of the urethane resin (A) is preferably 100 to 220°C, and more preferably 120 to 200°C.

For example, the flow start temperature of the urethane resin (A) may be mainly controlled by controlling the types and the amounts of the ingredients of the aqueous urethane resin (A) described later, specifically, a chain extender (a1), a polyol (a2), and a polyisocyanate (a3). For example, the flow start temperature may be increased by using a polycarbonate polyol or a polyether polyol as the polyol (a2), increasing the amount of the chain extender (a1), or using a highly crystalline polyisocyanate, for example, 4,4'-diphenylmethane diisocyanate or dicyclohexylmethane diisocyanate, as the polyisocyanate (a3). For example, the flow start temperature may be lowered by using a polyester polyol as the polyol (a2), reducing the amount of the chain extender (a1), or using a poorly crystalline polyisocyanate, for example, toluene diisocyanate or isophorone diisocyanate, as the polyisocyanate (a3). The flow start temperature of the urethane resin (A) may be controlled by appropriately selecting these methods. The method for measuring the flow start temperature of the urethane resin (A) will be described later in Examples.

The urethane resin (A) has a nonionic group and is dispersible in water. By virtue of the urethane resin (A) having a nonionic group, the urethane resin composition of the present invention easily exhibits high viscosity when used as an adhesive. Furthermore, the tendency of the viscosity to decrease during drying is small and thus the adhesive will not permeate into a substrate, such as a base fabric, during drying and offers excellent peel strength and soft texture.

For example, the urethane resin having a nonionic group may be obtained using an oxyethylene structure-containing compound as an ingredient.

Examples of the oxyethylene structure-containing compounds that may be used include oxyethylene structure-containing polyether polyols, such as polyethylene glycol, polyoxyethylene polyoxypropylene glycol, polyoxyethylene polyoxytetramethylene glycol, and polyethylene glycol dimethyl ether. These compounds may be used singly, or two or more may be used in combination. Among those described above, polyethylene glycol and/or polyethylene glycol dimethyl ether is preferably used because the hydrophilicity can be controlled more easily.

The number average molecular weight of the oxyethylene structure-containing compound is preferably in the range of 200 to 10,000 for the reasons that higher emulsifiability and aqueous dispersion stability are obtained, and is more preferably in the range of 300 to 3,000, still more preferably in the range of 300 to 2,000, and particularly preferably in the range of 300 to 1,000. The number average molecular weight of the oxyethylene structure-containing compound is a value measured by a gel permeation column chromatography (GPC) method.

Specifically, for example, the urethane resin (A) may be a reaction product of a chain extender (a1), a polyol (a2), a polyisocyanate (a3), and the oxyethylene structure-containing compound.

The chain extender (a1) may be one having a molecular weight of less than 500 (preferably in the range of 50 to 450). Specific examples include chain extenders having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, sucrose, methylene glycol, glycerin, sorbitol, bisphenol A, 4,4'-dihydroxydiphenyl, 4,4'-dihydroxydiphenyl ether, and trimethylolpropane; and chain extenders having an amino group, such as ethylene diamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine. These chain extenders may be used singly, or two or more may be used in combination. The molecular weight of the chain extender (a1) is a value calculated from the chemical formula.

The chain extender (a1) is preferably a chain extender having an amino group (hereinafter, written simply as the "amine chain extender") and is more preferably an amine chain extender having a molecular weight in the range of 30 to 250. The use of such a chain extender is advantageous in that the chain extension can proceed easily even at a relatively low temperature of 30°C or below and thereby the energy consumption during the reaction can be saved, that the introduction of urea groups offers further enhancements in mechanical strength, film formability, texture, low-temperature toughness, immediate releasability, and peel strength, and that the urethane resin (A) can be obtained with a high solid content easily. When two or more chain extenders are used in combination, the molecular weight is the average of the molecular weights thereof, and the average molecular weight falls in the preferred range described above.

The chain extender (a1) is more preferably used in a ratio of 0.1 to 30 mass%, and particularly preferably 0.5 to 10 mass% relative to the total mass of the ingredients constituting the urethane resin (A) for the reasons that further enhancements can be obtained in mechanical strength, film formability, texture, peel strength, immediate releasability, emulsifiability, low-temperature flexibility, and aqueous dispersion stability, and that the urethane resin (A) can be obtained with a high solid content more easily.

Examples of the polyols (a2) that may be used include polyether polyols, polyester polyols, polyacrylic polyols, polycarbonate polyols, and polybutadiene polyols. The polyols may be used singly, or two or more may be used in combination. The polyols (a2) are not the oxyethylene structure-containing compounds used to impart the nonionic groups.

From the point of view of the mechanical strength of the obtainable films, the number average molecular weight of the polyol (a2) is preferably in the range of 500 to 100,000, more preferably in the range of 800 to 10,000. The number average molecular weight of the polyol (a2) is a value measured by a gel permeation column chromatography (GPC) method.

The polyol (a2) is more preferably used in a ratio of 40 to 90 mass%, particularly preferably 50 to 80 mass% relative to the total mass of the ingredients constituting the urethane resin (A) for the reason that higher mechanical strength can be obtained.

Examples of the polyisocyanates (a3) that may be used include aromatic polyisocyanates, such as phenylene diisocyanate, toluene diisocyanate, diphenylmethane diisocyanate, xylylene diisocyanate, naphthalene diisocyanate, polymethylene polyphenyl polyisocyanate, and carbodiimidized diphenylmethane polyisocyanate; and aliphatic polyisocyanates and alicyclic polyisocyanates, such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate. The polyisocyanates may be used singly, or two or more may be used in combination.

The polyisocyanate (a3) is more preferably used in a ratio of 5 to 40 mass%, particularly preferably 10 to 35 mass% relative to the total mass of the ingredients constituting the urethane resin (A) for the reason that higher mechanical strength can be obtained.

The oxyethylene structure-containing compound is preferably used in a ratio of 5 mass% or less, more preferably 3 mass% or less, and still more preferably 0.25 to 3 mass% relative to the total mass of the ingredients constituting the urethane resin (A) for the reason that further enhancements can be obtained in emulsifiability, aqueous dispersion stability, texture, immediate releasability, low-temperature flexibility, and film formability.

The average particle size of the urethane resin (A) is preferably in the range of 0.01 to 1 µm, and more preferably in the range of 0.05 to 0.9 um for the reason that further enhancements can be obtained in texture, low-temperature flexibility, and film formability. The average particle size of the urethane resin (A) may be measured by the method described later in Examples.

In the urethane resin composition of the present invention, the mass ratio [(A)/(B)] of the urethane resin (A) to water (B) is essentially in the range of 50/50 to 80/20. This range ensures that the adhesive liquid being dried starts to increase its viscosity before the viscosity of the adhesive liquid starts to be lowered by the temperature rise due to drying. Thus, the adhesive will not permeate into a substrate, such as a base fabric, and offers excellent peel strength and texture. The mass ratio is more preferably 50/50 to 70/30.

For example, the water (B) may be ion-exchanged water or distilled water. These types of water may be used singly, or two or more may be used in combination.

Next, a method for producing the urethane resin (A) used in the present invention will be described.

The urethane resin (A) used in the present invention may be produced by reacting the polyol (a2), the polyisocyanate (a3), and the oxyethylene structure-containing compound in the absence of a solvent to prepare a urethane prepolymer (i) having an isocyanate group (hereinafter, this step will be written as the "prepolymerization step"), subsequently dispersing the urethane prepolymer (i) into the water (hereinafter, this step will be written as the "emulsification step"), and reacting the urethane prepolymer (i) with the chain extender (a1) to form the urethane resin (A) (hereinafter, this step will be written as the "chain extension step").

The prepolymerization step is preferably performed in the absence of a solvent. In the related art, a prepolymerization step is generally carried out in an organic solvent, such as methyl ethyl ketone or acetone. However, the organic solvent has to be driven off by a solvent removal step after an emulsification step, and this solvent removal step takes several days at actual production sites. Furthermore, driving off the organic solvent completely in the solvent removal step is difficult and a slight amount of the organic solvent remains in many cases. Thus, the conventional techniques have difficulties in being environmentally compatible perfectly. In contrast, prepolymerization without a solvent can produce a urethane resin that is completely free of organic solvents, and also can save labor in the production process.

For example, the prepolymerization step may be performed with a reaction vessel equipped with a stirring blade; a kneading machine, such as a kneader, a continuous kneader, Taper rolls, a single-screw extruder, a twin-screw extruder, a triple-screw extruder, a universal mixer, Plastomill, or a Votator-type kneading machine; a rotary dispersion mixing machine, such as TK Homomixer, FILMIX, Ebara Milder, CLEARMIX, ULTRA-TURRAX, CAVITRON, or BIO-MIXER; an ultrasonic dispersing device; or a device that has no moving parts and performs mixing by using the flow of the fluid itself, such as an in-line mixer.

In the prepolymerization step, the molar ratio [isocyanate groups/(hydroxyl groups and amino groups)] of the isocyanate groups in the polyisocyanate (a3) to the total of the hydroxyl groups in the polyol (a2) and the hydroxyl groups and the amino groups in the oxyethylene structure-containing compound is preferably in the range of 1.1 to 3, and more preferably in the range of 1.2 to 2 for the reason that further enhancements can be obtained in low-temperature flexibility, crack resistance, film formability, texture, peel strength, peel strength, and mechanical strength.

For example, the reaction in the prepolymerization step may be performed at 50 to 120°C for 1 to 10 hours.

For example, the emulsification step may be performed with a reaction vessel equipped with a stirring blade; a kneading machine, such as a kneader, a continuous kneader, Taper rolls, a single-screw extruder, a twin-screw extruder, a triple-screw extruder, a universal mixer, Plastomill, or a Votator-type kneading machine; a rotary dispersion mixing machine, such as a homomixer, a static mixer, FILMIX, Ebara Milder, CLEARMIX, ULTRA-TURRAX, CAVITRON, or BIO-MIXER; an ultrasonic dispersing device; or a device that has no moving parts and performs mixing by using the flow of the fluid itself, such as an in-line mixer.

The emulsification step is preferably performed at a temperature that does not evaporate water. For example, the temperature may be 10 to 90°C. The emulsification step may be performed using the same equipment as the prepolymerization step.

In the chain extension step, the isocyanate groups in the urethane prepolymer (i) react with the chain extender (a1) and the urethane prepolymer (i) is increased in molecular weight to form the urethane resin (A). From the point of view of productivity, the chain extension step is preferably performed at a temperature of 50°C or below.

In the chain extension step, the molar ratio [(hydroxyl groups and amino groups)/isocyanate groups] of the total of the hydroxyl groups and the amino groups in the chain extender (a1) to the isocyanate groups in the urethane prepolymer (i) is preferably in the range of 0.8 to 1.1, and more preferably in the range of 0.9 to 1 for the reason that further enhancements can be obtained in low-temperature flexibility, crack resistance, film formability, peel strength, immediate releasability, texture, and mechanical strength.

The chain extension step may be performed using the same equipment as the prepolymerization step.

The powder (C) essentially has a bulk density of 400 g/L or less. By the use of the specific powder (C), the adhesive viscosity is increased and the tendency of the viscosity to decrease during drying is small. Thus, the adhesive will not permeate into a substrate, such as a base fabric, during drying and offers excellent peel strength and texture. In order to further enhance the above effects, the bulk density of the powder (C) is preferably 5 to 400 g/L, and more preferably 10 to 360 g/L. The bulk density of the powder (C) is a value obtained by filling a container having a known volume and a known weight with the powder and measuring the weight of the powder accurately.

Examples of the powders (C) that may be used include silica powder, silicone powder, cellulose powder, urethane resin powder, acrylic resin powder, aluminosilica powder, hectorite powder, and bentonite powder. Among these, one or more selected from the group consisting of silica powder, silicone powder, and cellulose powder is preferable for the reason that the above effects can be further enhanced.

From the point of view of further enhancing the effects described above, the powder (C) is preferably used in an amount of 0.1 to 15 parts by mass, and more preferably 0.1 to 10 parts by mass with respect to 100 parts by mass of the urethane resin (A).

The urethane resin composition of the present invention contains the urethane resin (A), the water (B), and the powder (C) as the essential components, and may further contain additives as required.

Examples of the additives that may be used include surfactants, emulsifiers, neutralizers, thickeners, urethane-forming reaction catalysts, fillers, pigments, dyes, flame retardants, leveling agents, and antiblocking agents. These additives may be used singly, or two or more may be used in combination. While the production of the urethane resin (A) preferably involves substantially no organic solvents, an organic solvent may be added as an additive.

As described above, the urethane resin composition of the present invention contains water and is environmentally friendly. Furthermore, the urethane resin composition excels in peel strength and texture. Furthermore, the urethane resin composition does not need a crosslinking agent and has a long pot life, and is also excellent in immediate releasability. Thus, the urethane resin composition of the present invention may be suitably used in the production of synthetic leather, and may be suitably used especially as an adhesive layer in synthetic leather.

Next, a synthetic leather having an adhesive layer formed from the urethane resin composition of the present invention will be described.

The synthetic leather includes at least a base fabric (i), an adhesive layer (ii), and a skin layer (iii). Specific examples of the configurations include the following:
(1) Base fabric (i), adhesive layer (ii), skin layer (iii)
(2) Base fabric (i), adhesive layer (ii), intermediate layer, skin layer (iii)
(3) Base fabric (i), wet porous layer, adhesive layer (ii), skin layer (iii)
(4) Base fabric (i), wet porous layer, adhesive layer (ii), intermediate layer, skin layer (iii)

Examples of the base fabrics (i) that may be used include nonwoven fabrics, woven fabrics, and knitted fabrics made from polyester fibers, polyethylene fibers, nylon fibers, acrylic fibers, polyurethane fibers, acetate fibers, rayon fibers, polylactic acid fibers, cotton, hemp, silk, wool, glass fibers, carbon fibers, and blended fibers of these fibers.

The wet porous layer may be one formed by a known wet film-forming method using a solvent-based urethane resin composition.

For example, the materials for forming the intermediate layer and the skin layer (iii) may be known aqueous urethane resins, solvent-based urethane resins, solvent-free urethane resins, aqueous acrylic resins, silicone resins, polypropylene resins, and polyester resins. These resins may be used singly, or two or more may be used in combination.

For example, the thickness of the adhesive layer (ii) may be in the range of 30 to 60 µm.

The flow start temperature of the adhesive layer (ii), that is, the flow start temperature of a cured product of the urethane resin composition of the present invention is preferably 155°C or above, and more preferably in the range of 160 to 220°C for the reason that higher heat resistance can be obtained. The flow start temperature of a cured product of the urethane resin composition may be measured by the method described later in Examples.

Next, a method for producing a synthetic leather having the configuration (1) will be described.

For example, the synthetic leather production method may be such that a skin layer-forming resin is applied onto a release-treated substrate and is dried to form a skin layer (iii), and subsequently the urethane resin composition of the present invention is applied onto the skin layer (iii) and is attached to a base fabric (i) before the urethane resin composition is completely cured. This method is called a wet lamination method or a semi-wet lamination method. This method offers still enhanced peel strength.

For example, the urethane resin may be applied with an applicator, a roll coater, a spray coater, a T-die coater, a knife coater, or a comma coater.

Where necessary, the synthetic leather manufactured above may be aged, for example, at 30 to 100°C for 1 to 10 days.

### EXAMPLES

The present invention will be described in greater detail hereinbelow by way of Examples.

### [Example 1]

In the presence of 0.1 part by mass of stannous octoate, 1,000 parts by mass of polyether polyol ("PTMG2000" manufactured by Mitsubishi Chemical Corporation, number average molecular weight: 2,000, hereinafter written simply as "PTMG"), 38 parts by mass of polyethylene glycol ("PEG600" manufactured by NOF CORPORATION, number average molecular weight: 600, hereinafter written simply as "PEG"), and 262 parts by mass of dicyclohexylmethane diisocyanate (hereinafter written simply as "HMDI") were reacted at 100°C until the NCO % reached 2.8 mass%. Urethane prepolymer A1 was thus obtained.

1,000 Parts by mass of the urethane prepolymer A1 was heated to 70°C, and 200 parts by mass of a 20 mass% aqueous sodium dodecylbenzenesulfonate solution ("NEOGEN S-20F" manufactured by DKS Co. Ltd.) and 650 parts by mass of water were mixed therewith to give an emulsion.

Immediately thereafter, a water-diluted solution of piperazine (hereinafter written simply as "PP") having an amino group content corresponding to 95% of the NCO groups was added to perform chain extension. Thus, an aqueous urethane resin dispersion with a nonvolatile urethane resin content of 50 mass% was obtained as the final product.

A vessel was charged with 100 parts by mass of the aqueous urethane resin dispersion, 5 parts by mass of a powder ("Acematt OK-412" manufactured by Evonik, silica powder with a bulk density of 130 g/L, hereinafter written simply as "OK-412"), and 0.1 part by mass of an anti-foaming agent ("TEGO FOAMEX800" manufactured by Evonik). The mixture was stirred with a mechanical mixer at 2,000 rpm for 2 minutes and was then defoamed with a vacuum defoaming device. Urethane resin composition (1) was thus obtained.

### [Example 2]

Urethane resin composition (2) was obtained in the same manner as in Example 1, except that PTMG in Example 1 was changed to polycarbonate polyol ("ETERNACOLL UH-100" manufactured by UBE Corporation, number average molecular weight: 1,000) and the mass ratio of the urethane resin to water was changed to 60/40.

### [Example 3]

Urethane resin composition (3) was obtained in the same manner as in Example 1, except that PTMG in Example 1 was changed to polyester polyol ("PLACCEL 210" manufactured by Daicel Corporation, number average molecular weight: 1,000).

### [Example 4]

Urethane resin composition (4) was obtained in the same manner as in Example 1, except that OK-412 in Example 1 was changed to cellulose powder ("KC-FLOCK W-200Y" manufactured by NIPPON PAPER Chemicals CO., LTD., bulk density: 350 g/L, hereinafter written simply as "W-200Y").

### [Comparative Example 1]

Urethane resin composition (R1) was obtained in the same manner as in Example 1, except that OK-412 in Example 1 was changed to silicone resin powder ("KMP-590" manufactured by Shin-Etsu Chemical Co., Ltd., bulk density: 580 g/L, hereinafter written simply as "KMP-590").

### [Comparative Example 2]

Aqueous resin composition (R2) including aqueous urethane resin dispersion (1) was obtained in the same manner as in Example 1, except that OK-412 in Example 1 was changed to urethane resin powder ("ART PEARL JMB-800" manufactured by Negami Chemical Industrial Co., Ltd., bulk density: 413 g/L, hereinafter written simply as "JMB-800").

### [Comparative Example 3]

Urethane resin composition (R3) was obtained in the same manner as in Example 1, except that OK-412 in Example 1 was not used.

### [Comparative Example 4]

In the presence of 0.1 part by mass of stannous octoate, 1,000 parts by mass of polyether polyol ("PTMG1000" manufactured by Mitsubishi Chemical Corporation, number average molecular weight: 1,000) and 444 parts by mass of isophorone diisocyanate were reacted at 70°C until the NCO % reached 2.9%. Subsequently, 619 parts by mass of acetone was added to give an acetone solution of a urethane resin. The urethane resin solution was mixed with 365 parts by mass of a 50% aqueous sodium diaminoethylsulfone solution and 1639 parts by mass of ion-exchanged water to perform phase inversion emulsification. Thus, an emulsion in which the urethane resin was dispersed in water was obtained.

Subsequently, acetone was driven off from the emulsion and thereby an aqueous urethane resin dispersion having a nonvolatile content of 50 mass% was obtained. The flow start temperature of the urethane resin was 180°C.

A vessel was charged with 100 parts by mass of the aqueous urethane resin dispersion, 5 parts by mass of OK-412, and 0.1 part by mass of an anti-foaming agent ("TEGO FOAMEX800" manufactured by Evonik). The mixture was stirred with a mechanical mixer at 2,000 rpm for 2 minutes and was then defoamed with a vacuum defoaming device. Urethane resin composition (R4) was thus obtained.

### [Comparative Example 5]

In the presence of 1,225 parts by mass of methyl ethyl ketone and 0.1 part by mass of stannous octoate, 1,000 parts by mass of polyether polyol ("PTMG1000" manufactured by Mitsubishi Chemical Corporation, number average molecular weight: 1,000), 50 parts by mass of 2,2'-dimethylolpropionic acid, and 175 parts by mass of isophorone diisocyanate were reacted at 70°C until the solution viscosity reached 20,000 mPa·s. Subsequently, 3 parts by mass of methanol was added to stop the reaction. A methyl ethyl ketone solution of an anionic urethane resin was thus obtained. 61 Parts by mass of polyoxyethylene distyrenated phenyl ether (hydrophile-lipophile balance: 13) and 38 parts by mass of triethylamine were mixed with the urethane resin solution, and 2,450 parts by mass of ion-exchanged water was added to perform phase inversion emulsification. An emulsion in which the urethane resin was dispersed in water was thus obtained.

Subsequently, methyl ethyl ketone was driven off from the emulsion. An aqueous urethane resin dispersion having a nonvolatile content of 50 mass% was thus obtained. The flow start temperature of the urethane resin was below 40°C.

A vessel was charged with 100 parts by mass of the aqueous urethane resin dispersion, 5 parts by mass of OK-412, and 13 parts by mass of a carbodiimide crosslinking agent ("CARBODILITE V-04" (solid content: 40 mass%) manufactured by Nisshinbo Chemical Inc., hereinafter written simply as "V-04"). The mixture was stirred with a mechanical mixer at 2,000 rpm for 2 minutes and was then defoamed with a vacuum defoaming device. Urethane resin composition (R5) was thus obtained.

### [Comparative Example 6]

Urethane resin composition (R6) was obtained in the same manner as in Example 1, except that more water than in Example 1 was added to control the mass ratio of the urethane resin to water to 40/60.

### [Method for Measuring the Number Average Molecular Weight]

The number average molecular weights of the components, such as the polyols, used in Examples and Comparative Examples are values measured by a gel permeation column chromatography (GPC) method under the following conditions.

Measurement device: High-performance GPC device ("HLC-8220GPC" manufactured by TOSOH CORPORATION)
Columns: The following columns manufactured by TOSOH CORPORATION were connected in series.
   "TSKgel G5000" (7.8 mm I.D. × 30 cm) × 1
   "TSKgel G4000" (7.8 mm I.D. × 30 cm) × 1
   "TSKgel G3000" (7.8 mm I.D. × 30 cm) × 1
   "TSKgel G2000" (7.8 mm I.D. × 30 cm) × 1
Detector: RI (differential refractometer)
Column temperature: 40°C
Eluent: Tetrahydrofuran (THF)
Flow rate: 1.0 mL/min
Injection volume: 100 µL (tetrahydrofuran solution with 0.4 mass% sample concentration)
Standard samples: A calibration curve was created using the following standard polystyrenes.

### (Standard Polystyrenes)

"TSKgel Standard Polystyrene A-500" manufactured by TOSOH CORPORATION
"TSKgel Standard Polystyrene A-1000" manufactured by TOSOH CORPORATION
"TSKgel Standard Polystyrene A-2500" manufactured by TOSOH CORPORATION
"TSKgel Standard Polystyrene A-5000" manufactured by TOSOH CORPORATION
"TSKgel Standard Polystyrene F-1" manufactured by TOSOH CORPORATION
"TSKgel Standard Polystyrene F-2" manufactured by TOSOH CORPORATION
"TSKgel Standard Polystyrene F-4" manufactured by TOSOH CORPORATION
"TSKgel Standard Polystyrene F-10" manufactured by TOSOH CORPORATION
"TSKgel Standard Polystyrene F-20" manufactured by TOSOH CORPORATION
"TSKgel Standard Polystyrene F-40" manufactured by TOSOH CORPORATION
"TSKgel Standard Polystyrene F-80" manufactured by TOSOH CORPORATION
"TSKgel Standard Polystyrene F-128" manufactured by TOSOH CORPORATION
"TSKgel Standard Polystyrene F-288" manufactured by TOSOH CORPORATION
"TSKgel Standard Polystyrene F-550" manufactured by TOSOH CORPORATION

### [Method for Measuring the Flow Start Temperature of the Urethane Resins (A)]

The aqueous urethane resin dispersions obtained in Examples and Comparative Examples were each applied to release paper (coating thickness: 150 um) and dried with a hot air dryer at 70°C for 4 minutes and then at 120°C for 2 minutes to give dried products. The dried products were analyzed with flow tester "CFT-500A" manufactured by SHIMADZU CORPORATION (equipped with a die 1 mm in diameter and 1 mm in length, load: 98 N, heat-up rate: 3°C/min) to measure the flow start temperature.

### [Method for Preparing Skin Layer Mixture]

100 g of ether-based PUD "HYDRAN WLS-120AR" (manufactured by DIC CORPORATION), 2.0 g of thickener "Borch Gel ALA" (manufactured by Borchers), leveling agent "TEGO Flow 425" (manufactured by Evonik), antifoaming agent "TEGO Twin 4000" (manufactured by Evonik), and black pigment "DILAC HS-9550" (manufactured by DIC CORPORATION) were stirred with a mechanical mixer at 2000 rpm for 2 minutes, and the mixture was defoamed with a vacuum defoaming device to give a skin layer mixture.

### [Method for Producing Synthetic Leathers]

The skin layer mixture was applied to release paper EK-100D (manufactured by Lintech) with a knife coater (coating thickness: 100 µm) and was dried with a hot air dryer (drying conditions: 70°C for 2 minutes followed by 120°C for 2 minutes) to form a skin layer film. Furthermore, the urethane resin compositions obtained in Examples and Comparative Examples were each applied to the skin layer film with a knife coater (the coating thickness was controlled so that the dry film thickness would be 50 um). A fabric substrate was placed on each of the urethane resin composition layers (adhesive layers) and was attached thereto with a laminator under conditions where the temperature was 25°C, the pressure was 5 MPa, and the feed rate was 0.5 m/min. The adhesive layers were dried with a hot air dryer (drying conditions: 120°C for 2 minutes), and the skin layers were immediately released from the release paper. Synthetic leather workpieces were thus obtained.

### [Method for Measuring the Peel Strength]

A 2.5 cm wide hot-melt tape ("BW-2" manufactured by SAN CHEMICALS, LTD.) was placed on the surface of the skin layer film of the synthetic leather and was thermally pressed thereto at 150°C for 30 seconds, thereby bonding the hot-melt tape. The sample was cut along the width of the hot-melt tape. Part of the sample was peeled, and the substrate and the hot-melt tape were held with chucks. The peel strength was measured with Shimadzu Autograph "AG-1" (manufactured by Shimadzu Corporation) under conditions where the full scale was 5 kg and the head speed was 20 mm/min. The data obtained was averaged and converted to a value per 1 cm width.

### [Method for Evaluating the Adhesive Layer Condition]

The synthetic leathers obtained in Examples and Comparative Examples were cut to a width of 1 mm, and the cross sections of the workpieces were observed with an optical microscope and were evaluated as follows.
"T": The adhesive layer was present between the skin layer and the substrate.
"F": There was no adhesive layer between the skin layer and the substrate.

### [Method for Evaluating the Texture]

The synthetic leathers obtained in Examples and Comparative Examples were evaluated by touch.
⊚: Highly flexible, o: Flexible, Δ: Poorly flexible, ×: Hard

**[Table 1]**

| Table 1 | Ex. 1 | Ex. 2 | Ex. 3 | Ex. 4 |
|---|---|---|---|---|
| Urethane resin composition | (1) | (2) | (3) | (4) |
| Hydrophilic group in urethane resin | Nonionic | Nonionic | Nonionic | Nonionic |
| Flow start temperature of urethane resin (°C) | 180 | 180 | 150 | 180 |
| (A)/(B) mass ratio | 50/50 | 60/40 | 50/50 | 50/50 |
| Type of powder (C) | OK-412 | OK-412 | OK-412 | W-200Y |
| Bulk density of powder (C) (g/L) | 130 | 130 | 130 | 215 |
| Peel strength (kgf/mc) | 1.3 | 1.4 | 1.3 | 1.2 |
| Evaluation of adhesive layer condition | T | T | T | T |
| Evaluation of texture | ⊚ | ⊚ | ⊚ | ○ |

**[Table 2]**

| Table 2 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|
| Urethane resin composition | (R1) | (R2) | (R3) | (R4) | (R5) | (R6) |
| Hydrophilic group in urethane resin | Nonionic | Nonionic | Nonionic | Anionic | Anionic | Nonionic |
| Flow start temperature of urethane resin (°C) | 180 | 180 | 180 | 180 | Below 40 | 180 |
| (A)/(B) mass ratio | 50/50 | 50/50 | 50/50 | 50/50 | 50/50 | 40/60 |
| Type of powder (C) | KMP-590 | JMB-800 | None | OK-412 | OK-412 | OK-412 |
| Bulk density of powder (C) (g/L) | 580 | 413 | | 130 | 130 | 130 |
| Peel strength (kgf/mc) | 0.8 | 0.7 | 0.6 | 0.8 | 0.1 | 0.7 |
| Evaluation of adhesive layer condition | F | F | F | F | F | F |
| Evaluation of texture | × | × | × | × | × | × |

The urethane resin compositions of Examples 1 to 4 according to the present invention were shown to excel in peel strength and texture.

In contrast, Comparative Examples 1 and 2, which involved a powder with a bulk density outside the range of the powder (C) specified in the present invention, resulted in low peel strength and poor texture.

Comparative Example 3, which did not use the powder (C), resulted in low peel strength and poor texture.

Comparative Example 4, which used a urethane resin having an anionic group in place of the urethane resin (A), resulted in low peel strength and poor texture.

Comparative Example 5, in which the urethane resin (A) was replaced by a urethane resin having an anionic group and having a flow start temperature outside the range specified in the present invention, resulted in low peel strength and poor texture.

Comparative Example 6, in which the mass ratio of the urethane resin (A) to the water (B) was outside the range specified in the present invention, resulted in low peel strength and poor texture.

## Claims

1. A urethane resin composition comprising a urethane resin (A) having a nonionic group, water (B), and a powder (C), wherein
the urethane resin (A) has a flow start temperature of 100°C or above,
the mass ratio [(A)/(B)] of the urethane resin (A) to the water (B) is in the range of 50/50 to 80/20, and
the bulk density of the powder (C) is 400 g/L or less.

2. The urethane resin composition according to claim 1, wherein the nonionic group in the urethane resin (A) is imparted by an oxyethylene structure-containing compound.

3. The urethane resin composition according to claim 1 or 2, wherein the powder (C) comprises one or more selected from the group consisting of silica powder, silicone powder, and cellulose powder.

4. A synthetic leather comprising at least a base fabric (i), an adhesive layer (ii), and a skin layer (iii), wherein the adhesive layer (ii) is formed from the urethane resin composition described in any one of claims 1 to 3.

5. A synthetic leather production method comprising applying the urethane resin composition described in any one of claims 1 to 3 and attaching a layer to the urethane resin composition before the urethane resin composition is completely cured.
